# EUROPEAN PATENT APPLICATION

(11) **EP 4 822 556 A1**
(43) Date of publication of application: **14.10.2026**
(21) Application number: 25182187.2
(22) Date of filing: 11.06.2025
(51) Int. Cl.: G06F 16/334

(54) **SEARCH METHOD, HOST AND PROCESS NEAR MEMORY APPARATUS**

(30) Priority: 10.04.2025 CN 202510449686
(71) Applicant: Samsung Electronics Co., Ltd., Suwon-si, Gyeonggi-do 16677 (KR)
(72) Inventor: MA, Xiangfei, Xi'an (CN); KIM, Hyungsup, Xi'an (CN); YOON, Sungho, Xi'an (CN); CHU, Younsung, Xi'an (CN)
(74) Representative: Marks & Clerk LLP

(57) **Abstract**

The present disclosure provides a search method, a host, and a process near memory (PNM) apparatus, and a host storage system. The search method, when executed by a host may include calling a process near memory (PNM) apparatus to perform a search-related computation on a vector dataset in a vector database; and receiving a result associated with the search-related computation from the PNM apparatus. The search method, when executed by a PNM apparatus may include performing a search-related computation on a vector dataset in a vector database in response to receiving a calling instruction from a host; and returning a result associated with the search-related computation to the host after completion of the search-related computation.

## Description

### BACKGROUND

The present disclosure relates to a field of storage, and more particularly, to a search method, a host and a process near memory apparatus.

Representations (e.g., high-dimensional vectors, or vectors for short) of unstructured data (e.g., images, texts, videos, or audios) are stored in a vector database. Commonly used vector similarity algorithms are also generally integrated or implemented in the vector database. Based on a vector similarity search, the vector database may identify the most similar data items in a vector dataset, which may be used for fields such as recommendation systems (including recommending similar products in online shopping, finding similar images, or recommending similar videos on video websites), biological protein structure or gene sequence identification, financial fraud detection, and Internet of Things (IoT) data analyses, etc.

In current central processing unit (CPU)-based vector similarity search-related computation, the CPU frequently and repeatedly loads vectors from the memory and writes back the vector results, and the large number of vector similarity computation tasks increases the CPU's workload. Meanwhile, because the size of vector dataset increases, it becomes a performance bottleneck for the vector similarity search. Because of which, while a large amount of data moves between the CPU and the memory only a relatively narrow bandwidth remains therebetween; and the CPU is trapped in a huge number of vector similarity computation tasks, which affects the overall response time of the system.

### SUMMARY

The present disclosure provides a retrieval method, a host and a process near memory apparatus to address a part of or all the problems described above.

According to an aspect of the disclosure, a search method executed by at least one processor of a host is provided. The method may include calling a process near memory (PNM) apparatus to perform a search-related computation on a vector dataset in a vector database; and receiving a result associated with the search-related computation from the PNM apparatus.

According to an aspect of the disclosure, a search method executed by at least one processor of a process near memory (PNM) apparatus is provided. The method may include performing a search-related computation on a vector dataset in a vector database in response to receiving a calling instruction from a host; and returning a result associated with the search-related computation to the host after completion of the search-related computation.

According to an aspect of the disclosure, a host comprising memory storing instructions and at least one processor configured to execute the instructions is provided. The at least one processor may be configured to execute the instructions to call a process near memory(PNM) apparatus to perform a search-related computation on a vector dataset in a vector database; and receive a result associated with the search-related computation returned by the PNM apparatus.

According to an aspect of the disclosure, a process near memory (PNM) apparatus comprising device memory and a computing unit comprising at least one processor is provided. The at least one processor may be configured to perform a search-related computation on a vector dataset in a vector database in response to receiving a calling instruction from a host; and return a result associated with the search-related computation to the host after completion of the search-related computation.

According to an aspect of the disclosure, a host storage system including a host and a process near memory (PNM) apparatus is provided. The host may be configured to call the process near memory (PNM) apparatus to perform a search-related computation on a vector dataset in a vector database; and receive a result associated with the search-related computation returned by the PNM apparatus. The PNM apparatus may be configured to perform the search-related computation on the vector dataset in the vector database in response to receiving a calling instruction from the host; and return the result associated with the search-related computation to the host after completion of the search-related computation.

A PNM apparatus may comprise a processor and memory that are integrated into the same integrated circuit package or are implemented on interconnected chips. The processor may be formed of one or more logic units. The memory may be formed of one or more memory modules. The processor and memory may be implemented on the same chip, may be formed of one or more chiplets, or may be formed on separate chips either within the same package, or interconnected with each other (e.g. directly connected (chip to chip) or via one or more interposers).

It should be understood that the above general description and the later detailed description are examples and explanatory only and do not limit the present disclosure. At least some of the above and other features of the invention are set out in the claims.

### BRIEF DESCRIPTION OF DRAWINGS

The accompanying drawings herein are incorporated into and form part of the specification, illustrate embodiments consistent with the present disclosure, which are used in conjunction with the specification to explain the principles of the present disclosure and do not constitute an undue limitation of the present disclosure.
FIG. 1 illustrates a conceptual diagram of a vector database.
FIG. 2 illustrates a workflow diagram of accessing vector database.
FIG. 3 illustrates a schematic diagram of a CPU-based vector similarity search process.
FIGS. 4A and 4B illustrate schematic diagrams of a FLAT search algorithm and a LSH search algorithm.
FIG. 5 illustrates a schematic diagram of a CPU-based vector similarity search bottleneck.
FIGS. 6A and 6B illustrates architectural diagrams of a CPU-based vector similarity search and a search according to embodiments of the present disclosure.
FIG. 7 illustrates a flowchart of a search process on a host side according to embodiments of the present disclosure.
FIG. 8 illustrates a schematic diagram of index creation in a host according to embodiments of the present disclosure.
FIG. 9 illustrates a flowchart of a process for index creation in a host according to embodiments of the present disclosure.
FIG. 10 illustrates a schematic diagram of performing a search in a host according to embodiments of the present disclosure.
FIG. 11 illustrates a flowchart of a search process in a PNM apparatus according to embodiments of the present disclosure.
FIG. 12 illustrates a schematic diagram of index creation or performing a search in a PNM apparatus according to embodiments of the present disclosure.
FIG. 13 illustrates a process of performing a vector similarity computation within a PNM apparatus according to embodiments of the present disclosure.
FIG. 14 illustrates a schematic diagram of a host according to embodiments of the present disclosure.
FIG. 15 illustrates a schematic diagram of a PNM apparatus according to embodiments of the present disclosure.
FIG. 16 is a diagram of a system to which a storage device is applied, according to an embodiment.
FIG. 17 is a block diagram of a host storage system according to an example embodiment.
FIG. 18 is a diagram of a data center to which a memory device is applied, according to an embodiment.

### DETAILED DESCRIPTION

In order to enable a person of ordinary skill in the art to better understand the technical solutions of the present disclosure, the technical solutions provide by embodiments of the present disclosure will be clearly and completely described below in conjunction with the accompanying drawings.

It should be noted that the terms "first", "second", etc. in the specification and claims of the present disclosure and the accompanying drawings above are used to distinguish similar objects rather than to describe a particular order or sequence. It should be understood that data so distinguished may be interchanged, where appropriate, so that embodiments of the present disclosure described herein may be implemented in an order other than those illustrated or described herein. Embodiments described in the following examples do not represent all embodiments that are consistent with the present disclosure. Rather, they are only examples of devices and methods that are consistent with some aspects of the present disclosure, as detailed in the appended claims.

It should be noted herein that "at least one of the several items" in this disclosure includes "any one of the several items", "any combination of the several items" and "all of the several items" the juxtaposition of these three categories. For example, "including at least one of A and B" includes the following three juxtapositions: (1) including A; (2) including B; (3) including A and B. Another example is "performing at least one of operation one and operation two", which means the following three juxtapositions (1) performing operation one; (2) performing operation two; (3) performing operation one and operation two. Furthermore, "including one of A or B" (or "including one of A and B") may include at least the following two selections: (1) "including A"; (2) "including B".

The technical solutions provided according to embodiments of the present disclosure bring at least the following beneficial effects: the search-related computation is offloaded to the PNM apparatus for being performed, thereby it significantly reduces data movement between the CPU and memory and frees the CPU from a large number of search-related computation tasks so as to allow it to respond faster to other prioritized tasks; in addition, the use of the storage apparatus in conjunction with the PNM apparatus improves the efficiency of the data transfer, so that the performance of the search-related computation for the vector database is improved.

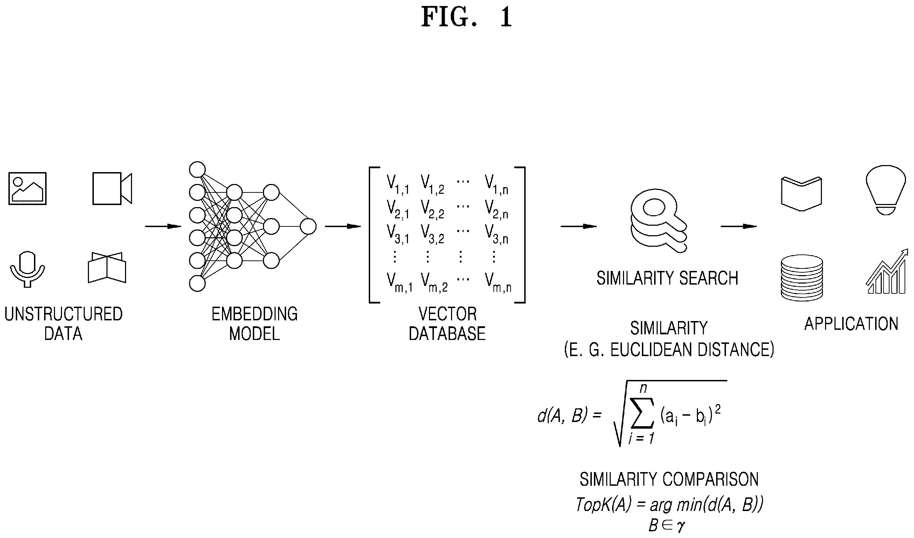

FIG. 1 illustrates a conceptual diagram of a vector database. Referring to FIG. 1, the vector database transforms a raw dataset including unstructured data into a vector dataset (hereinafter also referred to as a dataset) via an embedding model. This dataset is then stored in the vector database. The similarity between vectors may be measured using a mathematical metric (e.g., a Euclidean distance between vectors). Various algorithms have been developed to support vector similarity search operations, e.g., brute force search (e.g. FLAT), Local Sensitive Hashing (LSH), Inverted File (IVF) with Product Quantization (IVF-PQ), Approximate Nearest Neighbors (AVN), Approximate Nearest Neighbors Oh Yeah (ANNOY), Hierarchical Navigable Small World (HNSW), etc. Based on the vector similarity search, the vector database may identify the most similar data items in a vector dataset. The vector database may be used in recommendation systems (including recommending similar products in online shopping, finding similar images, or recommending similar videos on video websites), biological protein structure or gene sequence identification, financial fraud detection, and Internet of Things (IoT) data analyses, to name a few.

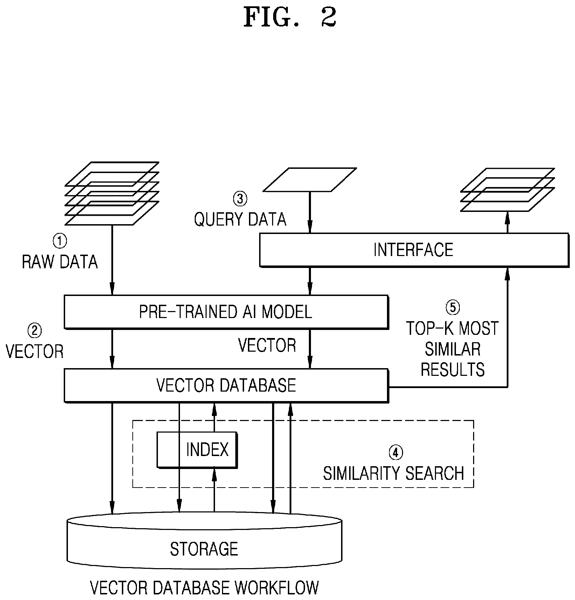

FIG. 2 illustrates a workflow diagram of a vector database. Referring to FIG. 2, the workflow of the vector database may be described with the following operations. Operation 1 includes preparing the raw dataset. Operation 2 includes converting the raw dataset into a vector dataset using a pre-trained model (called an embedding process) and storing it in the vector database. Operation 3 includes transforming query object data(s) into vector(s) using an embedding process, e.g., process of operation 2. Operation 4 includes searching the vector database for data items that are most similar to the query vector. Regarding operation 4, a direct brute force search may be performed for the vector dataset of small size. As another example, for the vector dataset of large size, the vector database may provide an indexing function, which, for example, may pre-order the vector dataset using a specified vector similarity search algorithm, so as to narrow down the scope of the query to speed up the query processing at the time of the actual query. Operation 5 includes the vector database returning the top K (i.e., top-K) results in the dataset that are most similar to the query object (e.g. where K is an integer greater than or equal to 1).

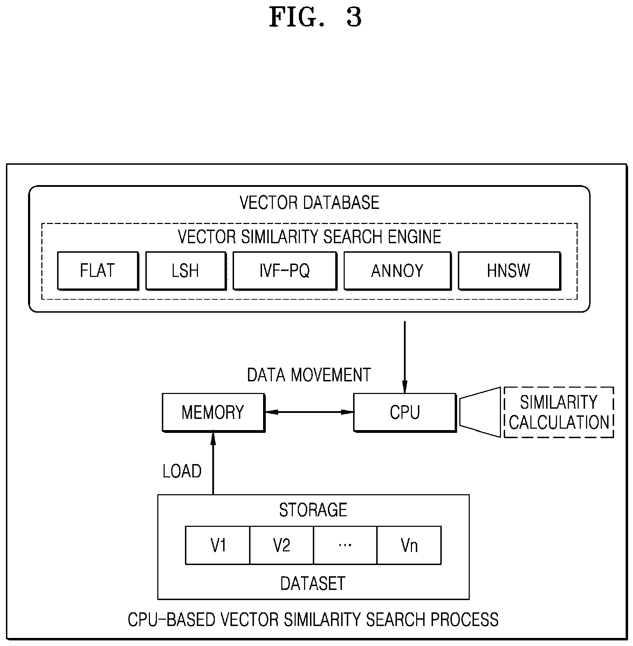

FIG. 3 illustrates the schematic diagram of a CPU-based vector similarity search process. Referring to FIG. 3, the vector similarity search process described in operation 4 of FIG. 2 will be explained in detail. The process may include loading the vector dataset from a storage apparatus (e.g., non-volatile memory, such as a solid state drive (SSD)) into the memory (e.g. random access memory (RAM)), and then reading the vectors in the memory for the similarity computation by the CPU. The CPU may perform the similarity computation based on various similarity search algorithms (e.g., FLAT, LSH, IVF-PQ, ANNOY, or HNSW) provided by a vector similarity search engine in the vector database.

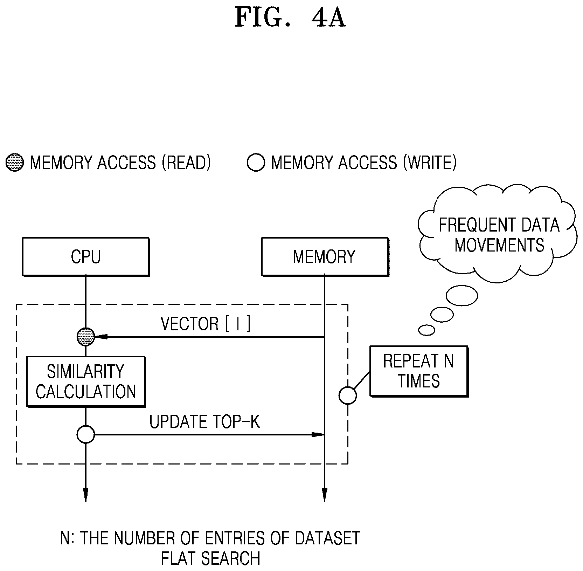

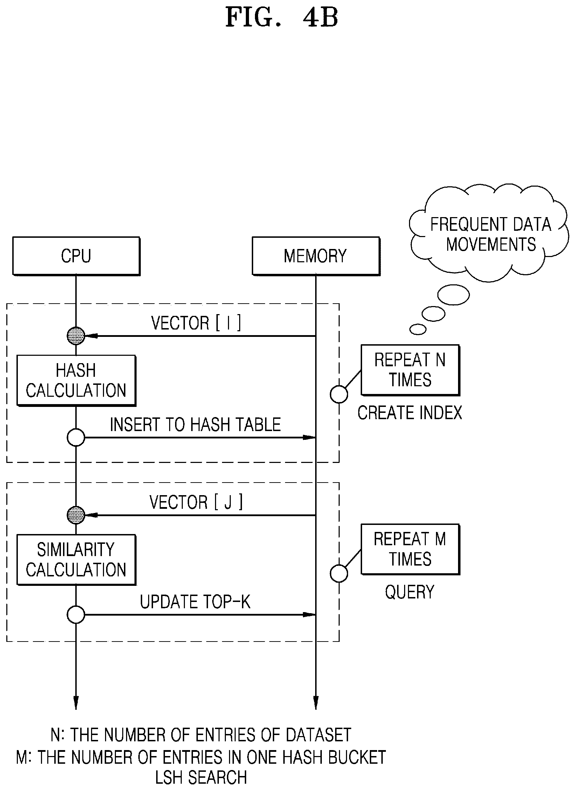

FIGS. 4A and 4B illustrate comparative schematic diagrams of a FLAT search algorithm and a LSH search algorithm. FIG. 4A is a schematic diagram of the FLAT search algorithm, and FIG. 4B is a schematic diagram of the LSH search algorithm.

In FLAT, the similarity between each vector in the vector database and the query vector is calculated. When the vector database includes N entries (i.e., N vectors), the process shown in FIG. 4A is repeated N times: the CPU reads the i^{th} vector from the memory (i.e., vector [i]), calculates the similarity between this vector and the query vector, and writes the vector to the memory when the top K candidate vectors need to be updated. In LSH, as shown in FIG. 4B, first indexes are created, then, the vectors in the vector database are mapped into different hash buckets through hash mapping. Then the query is executed/searched, but the query is executed/searched only in the hash bucket corresponding to the query vector. During the process of creating the indexes, the process, as shown in FIG. 4B, is repeated N times in the case that the vector database includes N entries (i.e., N vectors). The CPU reads the i^{th} vector from the memory (i.e., vector[i]), performs a hash calculation for the vector, and inserts the result of the hash calculation into a hash table (i.e., writes data to the memory). During the query process, in the case that the hash bucket corresponding to the query vector includes M entries, the process, as shown in FIG. 4B, is repeated M times: the CPU reads the vector (i.e., vector[j]) from the memory, calculates the similarity between this vector and the query vector, and writes the vector to the memory when the top K candidate vectors need to be updated.

It should be understood that the above search algorithms are only examples, and the present disclosure is not limited thereto, and other search algorithms may follow the same mode.

After analyzing related art regarding the operational process of the current CPU-based vector similarity search-related computation in CPU and memory, the problems in related art at least include: the CPU frequently and repetitively loads vectors from memory and writes back the vector computation results, and a large number of vector similarity computation tasks severely increase the workload of the CPU.

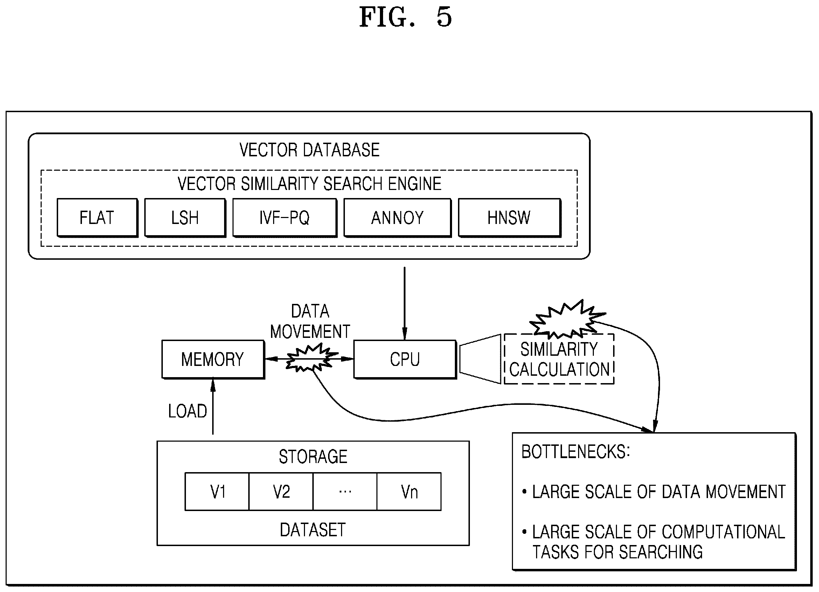

FIG. 5 illustrates a schematic diagram of a CPU-based vector similarity search bottleneck. Referring to FIG. 5, as the size of the vector dataset increases, it becomes a performance bottleneck for the vector similarity search. In the vector similarity search, a large amount of data moves between the CPU and the memory, while a relatively narrow bandwidth remains and the CPU is trapped in a huge number of vector similarity computation tasks, which affects the overall response time of the system.

In order to fundamentally reduce the data exchanges between the CPU and the memory, and to free the CPU from the heavy vector similarity search-related computation tasks, the present disclosure utilizes near memory processing characteristics of a Process Near Memory (PNM) apparatus to offload the vector search-related computation tasks in the vector database from the CPU to the PNM apparatus, and proposes a corresponding accelerated computing architecture.

The PNM is a technology that integrates memory and a logic chip into an advanced integrated circuit package to reduce data movement between the CPU and the memory by utilizing the memory for data computation. A PNM apparatus may comprise a processor and memory that are integrated into the same integrated circuit package or that are implemented on interconnected chips. The processor may be formed of one or more logic units. The memory may be formed of one or more memory modules. The processor and memory may be implemented on the same chip, may be formed of one or more chiplets, or may be formed on separate chips within the same package. By integrating the processor into the same package, the processor is located close to the memory, thereby reducing latency and power consumption and increasing bandwidth when transferring data between the processor and memory.

A Processor Near Memory (PNM) architecture may involve the strategic placement of processing units in close physical and logical proximity to memory resources, significantly reducing the latency and increasing the bandwidth of data access compared to traditional host processing. This proximity may be achieved through various integration techniques, such as multi-chip packaging, on-die integration of processing and memory components, or specialized interconnects facilitating rapid data exchange between discrete processing and memory units. Unlike Processor In Memory (PIM), PNM primarily focuses on accelerating data movement to distinct processing units rather than performing computation directly within the memory itself. While processing and memory remain largely separate functional blocks, their tight coupling aims to overcome the limitations of the memory wall for enhanced system performance and energy efficiency.

A Compute Express Link (CXL)-PNM technology utilizes the CXL interface to create a high-capacity and high-speed connection between the processor and memory, and the CXL-PNM technology reduces bottleneck in the data transfer between the CPU and memory by performing the computing functions at a place which is closer to the memory. Accordingly a PNM apparatus may utilize a CXL interface between the processor and memory.

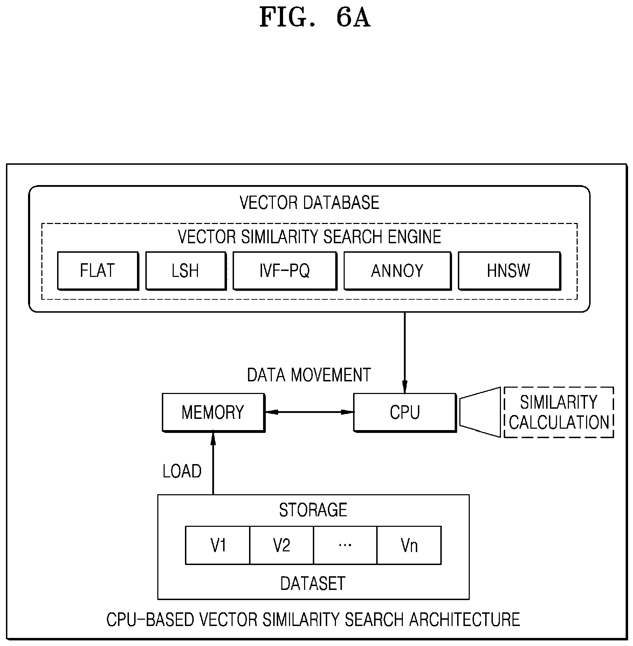

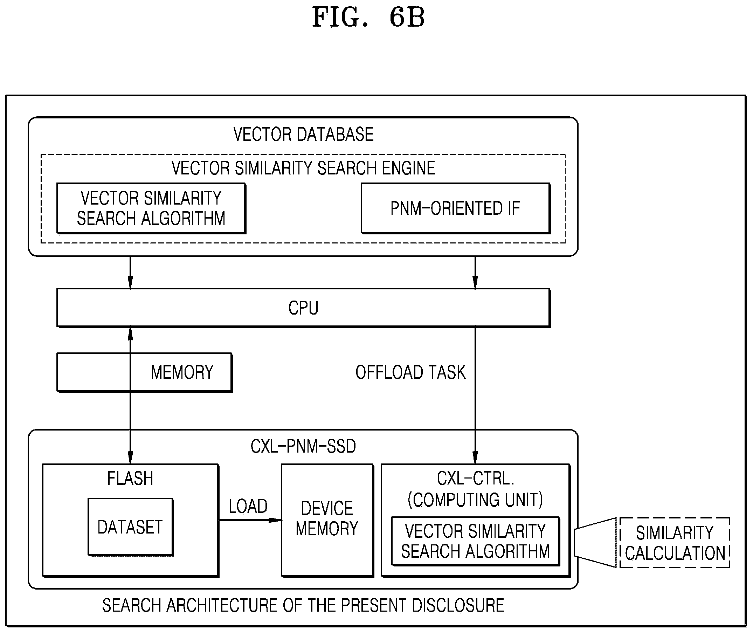

A search method, a host, and a PNM apparatus according to the present disclosure will be specifically described below with reference to FIGS. 6 to 18 of the accompanying drawings.

FIGS. 6A and 6B illustrate a comparison of architectures of a CPU-based vector similarity search and a search according to embodiments of the present disclosure. FIG. 6A is an architecture for the CPU-based vector similarity search in related art, while FIG. 6B is an architecture for the search according to embodiments of the present disclosure. CPU-based vector similarity search is used as an example, but it should be understood that the architecture for the search of the present disclosure is not limited to use for the similarity search. In the architecture for the search of the present disclosure, not only can the vector similarity search be performed based on the CPU (left route in FIG. 6B), but the search-related computation task can also be offloaded into the PNM apparatus (e.g., CXL-PNM apparatus) (right route in FIG. 6B). A PNM-oriented interface (IF) may be added to a vector similarity search engine of the vector database, and the host may call the PNM apparatus to perform the search-related computation via the PNM-oriented interface. In the architecture for the search of the present disclosure, a CXL-PNM-SSD (solid state drive) apparatus may be used, which includes a CXL-PNM consisting of a device memory and a computing unit, and an SSD containing a flash memory (i.e. flash), which stores the vector dataset in the flash. When the CXL-PNM performs the search-related computation, the vector dataset stored in the flash may be loaded into the device memory, and the similarity computation may be performed by the computing unit on the loaded vector dataset according to the similarity search algorithm. Since the SSD and the CXL-PNM are integrated as the CXL-PNM-SSD apparatus, the data transfer between the flash and the CXL-PNM may be considered as the internal transfer of the apparatus, such that the data transfer speed between the flash and the device memory is increased.

The present disclosure may consist of the following two modules deployed at the host side and the PNM apparatus (e.g., the CXL-PNM apparatus) side, respectively: a host module that provides a set of software interfaces in the vector database and a PNM apparatus module that implements the vector search-related computation processing inside the PNM apparatus. The host module may be responsible for calling the PNM apparatus to perform the vector search-related computation (e.g., a similarity search-related computation) and the PNM apparatus module may be responsible for interacting with an interface of the host side, accessing the device memory, and executing the vector search-related computation process.

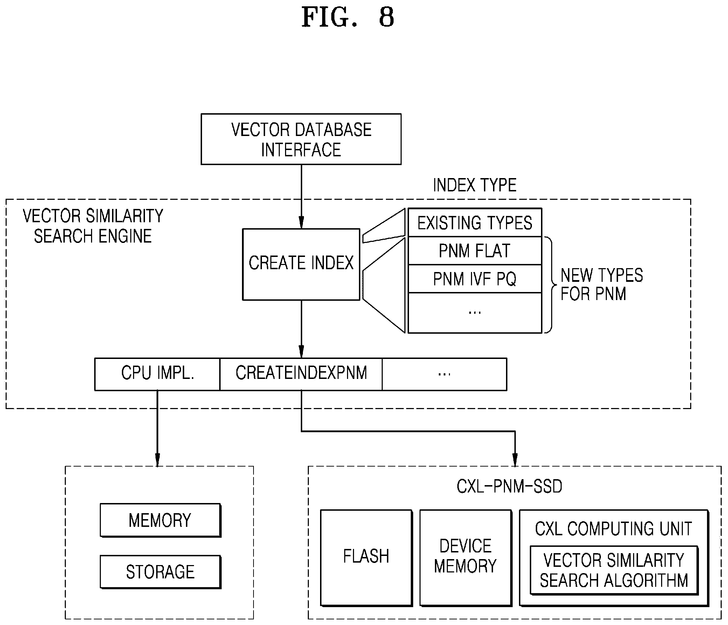

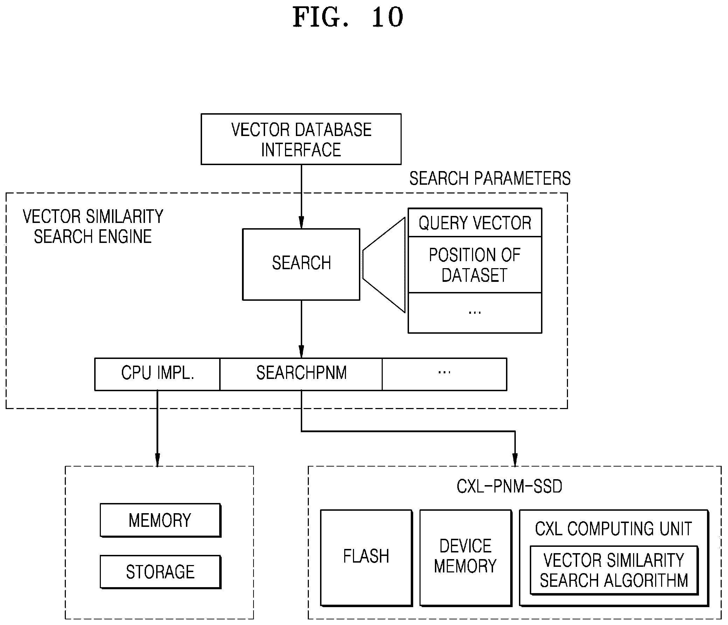

In embodiments, the CPU-based vector similarity search (left route in FIG. 6B) uses the same storage apparatus (flash) as the right route in FIG. 6B. However, a separate storage apparatus, e.g., another SSD, may be used for the left route of FIG. 6B (e.g., as shown in FIGS. 8 and 10). It should be understood that the above architecture for the search according to embodiments of the present disclosure is only an example and the present disclosure is not limited thereto. For instance, while a specific embodiment is described which makes use of an SSD having flash memory, it will be appreciated that alternative forms of non-volatile storage may be used.

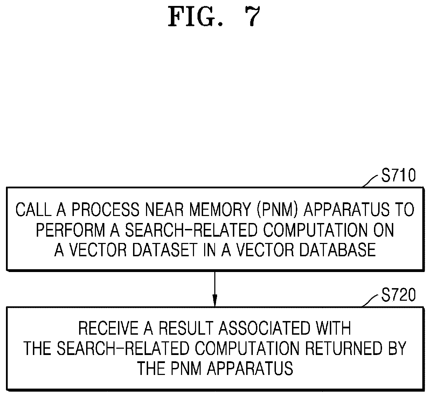

FIG. 7 illustrates a flowchart of a search method on a host side according to embodiments of the present disclosure.

Referring to FIG. 7, in operation S710, a process near memory (PNM) apparatus is called to perform a search-related computation on a vector dataset in a vector database.

In embodiments of the present disclosure, the host side may call the PNM apparatus to offload the search-related computation on the vector dataset to the PNM apparatus to be performed. Here, the search-related computation may include at least one of creating indexes of the vector dataset and/or performing a search on the vector dataset.

According to embodiments of the present disclosure, the PNM apparatus may be called to perform the search-related computation on the vector dataset by transmitting a calling instruction to the PNM apparatus through an interface (e.g., PNM-oriented interface) provided by the vector database.

In embodiments of the present disclosure, a PNM-oriented interface may be added to the vector similarity search engine of the vector database, and the host side may call the PNM apparatus to perform the search-related computation through the PNM-oriented interface. The PNM-oriented interface may be an interface for sending PNM calls (e.g. PNM instructions/commands) and for receiving the result of PNM calls (e.g. the outputs from offloaded tasks).

According to embodiments of the present disclosure, when indexes are created of the vector dataset, the PNM apparatus may be called to create the indexes for vectors in the vector dataset by providing index parameters to the PNM apparatus through an interface for creating the indexes, wherein the created indexes may be used to perform a search on the vector dataset. The index parameters may include: an index type. The PNM apparatus may also be called to create the indexes for the vectors in the vector dataset when the index type is an index type related to the PNM apparatus.

In embodiments of the present disclosure, a first host-side interface may be provided in the vector database as an interface for calling the PNM apparatus to create the indexes of the vector dataset, and the interface parameters (i.e., the index parameters) may include the index type. The vector database may provide the index type when creating the indexes. In the present disclosure, when creating the indexes, the vector database may provide new index types of PNM_* on the basis of the existing index types for instructing the vector database to call the PNM apparatus (e.g., the CXL-PNM apparatus) to complete the operation of creating the indexes instead of the CPU.

FIG. 8 illustrates a schematic diagram for a process of creating indexes on a host side according to embodiments of the present disclosure. Hereafter, the PNM apparatus is illustrated taking the CXL-PNM apparatus as an example. In FIG. 8, the CXL-PNM-SSD apparatus is used to increase the speed of data transfer between the flash and the device memory, but the present disclosure is not limited thereto. Referring to FIG. 8, the host side performs the operation through the vector database interface, and in the operation of creating the indexes, the host side calls the PNM apparatus (e.g., the CXL-PNM apparatus) to create the indexes for the vector dataset according to the index type. Specifically, the new index types of PNM_* (e.g., PNM_FLAT or PNM_IVF_PQ) are provided on the basis of the existing index type for instructing the calling of the PNM apparatus when creating the indexes. In embodiments, when the index type is the index type of PNM_* (e.g. a first index type representing PNM index creation), the host side may call the PNM apparatus to create the indexes for vectors in the vector dataset. In the same or other embodiments, when the index type is the existing index type (i.e., not the index type of PNM_*), the CPU on the host side may create the indexes for the vectors in the vector dataset.

When the index type is the index type of PNM_*, the host offloads the task of creating the indexes to the PNM apparatus using an interface for creating the indexes (e.g., CreateIndexPNM). When the index type is the index type of PNM_*, the vector dataset in the vector database may be stored by default in a storage apparatus that is integrated with the PNM apparatus, e.g., the SSD or flash. The PNM apparatus loads the vector dataset stored in the flash into the device memory, and the PNM apparatus creates indexes for the vectors in the vector dataset loaded into the device memory according to the index type provided through the interface for creating the indexes.

In same or other embodiments, when the index type is not the index type of PNM_*, the vector dataset in the vector database is by default stored in a separate storage apparatus (e.g., another SSD). The vector dataset stored in that storage device is loaded into the memory by the CPU on the host side, and the indexes are created for the vectors in the vector dataset loaded into the memory by the CPU.

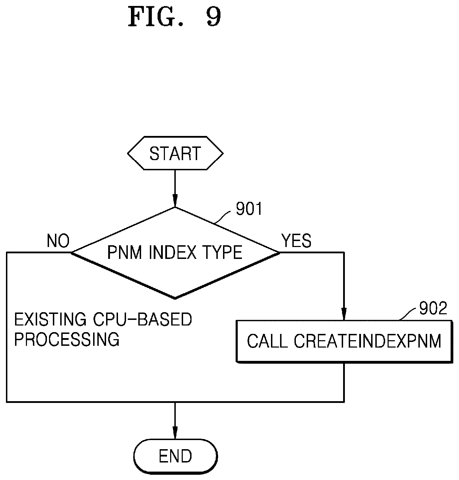

FIG. 9 illustrates a flowchart of creating indexes on a host side according to embodiments of the present disclosure. Referring to FIG. 9, the process of creating indexes includes operation 901 and operation 902. In operation 901, host side uses a processing method of creating the indexes (an operation of creating the indexes) provided by the vector database based on the index type. If the index type is the index type of PNM_*, operation 902 is performed in which the interface (e.g., CreateIndexPNM) calls the PNM apparatus to create the indexes of the vector dataset instructs the PNM apparatus to complete the index creating and return the result to the host side. However, if the index type is not the index type of PNM_*, existing CPU-based processing is employed.

In embodiments of the present disclosure, the creating of the indexes may be a pre-processing for the vectors in the vector dataset, for example, sorting, or categorizing, etc., so as to narrow down the scope of the query or to reduce the computing complexity to speed up the query processing at the time of the actual query. Moreover, the method of creating the indexes for the vectors in the vector dataset is different in the case of different similarity search methods. For example, considering the LSH search algorithm as in FIG. 4, the basic idea of the LSH is to hash-map the data items in the dataset into buckets so that similar data items have a high probability of being mapped into the same bucket. At the time of the query, its bucket number is obtained through performing the same hash mapping on the query item, the query item and the data items in the same bucket are compared, the data items similar to the query item may be quickly found. The LSH transforms the problem of finding similar data items in a very large set into the problem of finding the similar data items in a very small set through the hash mapping transformation operation, which reduces the amount of computation significantly. LSH may also use multiple hash tables to increase the accuracy. Each hash table consists of different hash functions and produces different hash buckets. At the time of the query, all data items in the buckets of different hash tables into which the query item falls are used as a candidate set, and then data items similar to the query item are found in the candidate set. For the LSH, the operation of creating the indexes for the vectors in the vector dataset may include: mapping the vectors in the vector database into different hash buckets by hash mapping and storing (inserting) them into the corresponding hash buckets of the hash table.

As another example, considering the IVF-PQ search algorithm, the IVF-PQ search algorithm combines the techniques of inverted file and product quantization. In this technique, for each vector, the inverted file stores a list that includes data of the vector. This allows for quick localization of data that contains similar features at the time of the query, while the product quantization reduces storage and computing complexity and helps to speed up the search by decomposing a high-dimensional vector into smaller sub-vectors and quantizing each sub-vector independently. For the IVF-PQ search algorithm, the operation of creating the indexes for the vectors in the vector dataset may include: for each high-dimensional vector in the vector dataset, mapping the high-dimensional vector to low-dimensional codebooks using the product quantization; and then constructing an inverted file on the low-dimensional codebooks. This creates an inverted list for the data corresponding to each codebook. It will be appreciated that the terms "high-dimensional" and "low-dimensional" are relative to each other - that is, they do not necessarily imply any particular size, other than specifying that the low-dimensional codebook has a lower dimensionality than the high-dimensional vector.

It should be understood that creating the indexes is illustrated herein by taking the LSH search algorithm and the IVF-PQ search algorithm as examples, but the operation of creating the indexes is not limited thereto, and other search algorithms, for example, FLAT, ANNOY and HNSW also have corresponding operation of creating the indexes, which will not be discussed in this disclosure.

According to embodiments of the present disclosure, when performing a search on the vector dataset, the PNM apparatus may be called to search for a query vector on the vector dataset by providing search parameters to the PNM apparatus through an interface for searching. The search parameters may include: the query vector and a storage position of the vector dataset. And, the PNM apparatus may be called to search for the query vector on the vector dataset when the storage position of the vector dataset is in a storage apparatus integrated with the PNM apparatus.

In embodiments of the present disclosure, a second host-side interface may be provided in the vector database as an interface for calling the PNM apparatus to perform the vector search. Generally, performing the vector search in the vector database consists of two scenarios, which are: searching in the vector dataset having created indexes; or searching directly on the original vector dataset (no indexes created). When searching in the vector dataset having the created indexes, since the vector dataset has been indexed and sorted, the search may be more easily narrowed down and results may be obtained quickly. The present disclosure describes the use of the PNM apparatus to accelerate the processing when searching directly on the original vector dataset. It should be understood that the method of the present disclosure may be applied to the vector dataset having the created indexes as well.

FIG. 10 illustrates a schematic diagram of performing a search on the host side according to embodiments of the present disclosure. Hereafter, the PNM apparatus is illustrated by taking the CXL-PNM apparatus as an example, and, in FIG. 10, the CXL-PNM-SSD apparatus is also used to increase the speed of data transfer between the flash and the device memory, but the present disclosure is not limited thereto. Referring to FIG. 10, the host side performs the search operation through the vector database interface, and in performing the search operation, the host side calls the PNM apparatus to search for the query vector in the vector dataset according to the storage position of the vector dataset. The specific flow on the host side may include an operation in which the search process detects the storage position of the vector dataset, and if the storage position of the vector dataset is in a storage apparatus integrated with the PNM apparatus, i.e., an SSD (e.g., flash), then the interface for searching (e.g., SearchPNM) is used to instruct the CXL-PNM apparatus to complete the search and return the result to the host side. The search parameters may include: the query vector and the storage position of the vector dataset. The CXL-PNM apparatus may load the vector dataset stored in the flash into the device memory based on the storage position of the vector dataset. The storage position of the vector dataset may include an address in the storage apparatus (i.e., an address in the flash) integrated with the PNM apparatus. The CXL-PNM apparatus may then search for the query vector on the vector dataset loaded into the device memory. However, according to embodiments, if the storage position of the vector dataset is in a separate storage apparatus (e.g., another SSD that is not integrated with the PNM apparatus), the vector dataset stored in that storage apparatus is loaded into the memory by the CPU on the host side, and the query vector is searched by the CPU on the vector dataset loaded into the memory, i.e., by employing the existing CPU-based processing.

Returning to FIG. 7, in the operation S720, a result associated with the search-related computation returned by the PNM apparatus is received.

According to embodiments of the present disclosure, when indexes of the vector dataset are created, a result of completion of creating the indexes returned by the PNM apparatus is received, and when a search is performed on the vector dataset, a search result regarding the query vector returned by the PNM apparatus is received.

In embodiments of the present disclosure, when the indexes of the vector dataset are created, the PNM apparatus may return a result identifier of the completion of creating the indexes which indicates that creating of the indexes is completed or not completed. Moreover, when the search on the vector dataset is performed (e.g., when the similarity search algorithm is employed), a plurality of vectors that are most similar to the query vector may be returned.

According to the above-described search method on the host side, the search-related computation is offloaded to the PNM apparatus, significantly reducing data movement between the CPU and memory and freeing the CPU from a large number of search-related computation tasks. This allows the CPU to respond faster to other prioritized tasks. In addition, the use of the storage apparatus in conjunction with the PNM apparatus improves the efficiency of the data transfer, improving the performance of the search-related computation for the vector database.

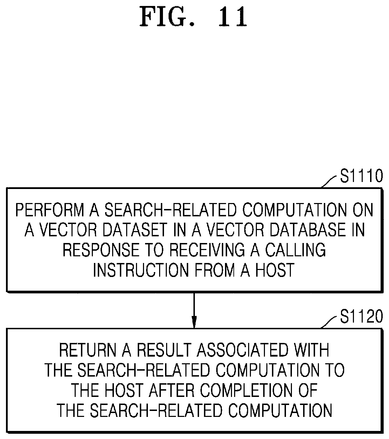

FIG. 11 illustrates a flowchart of a search method on a PNM apparatus side according to embodiments of the present disclosure.

Referring to FIG. 11, in operation S1110, a search-related computation on a vector dataset in a vector database is performed in response to receiving a calling instruction from a host.

In embodiments of the present disclosure, the PNM apparatus, instead of the CPU, may perform the search-related computation on the vector dataset in the vector database upon receiving the calling instruction from the host. The search-related computation may include at least one of creating the indexes of the vector dataset and performing the search on the vector dataset.

According to embodiments of the present disclosure, the search-related computation is performed on the vector dataset in response to the calling instruction transmitted by the host via an interface provided by the vector database. The indexes for vectors in the vector dataset are created according to index parameters provided by the host using an interface for creating the indexes, with the created indexes being used to perform a search on the vector dataset. Index parameters for the indexes may include an index type. In embodiments, a query vector is searched for on the vector dataset according to search parameters provided by the host using an interface for searching, with the search parameters including the query vector and a storage position of the vector dataset.

In embodiments of the present disclosure, the host transmits the calling instruction via the interface for creating the indexes (e.g., CreateIndexPNM) or the interface for searching (e.g., SearchPNM) provided by the vector database, and provides the index parameters and the search parameters to the PNM apparatus, respectively. The PNM apparatus either creates the indexes for the vectors in the vector dataset according to the index parameters or searches for the query vector on the vector dataset according to the search parameters, after receiving the corresponding calling instruction.

According to embodiments of the present disclosure, the vector dataset is loaded from a storage apparatus integrated with the PNM apparatus into a device memory of the PNM apparatus and the indexes for the vectors in the vector dataset loaded into the device memory of the PNM apparatus are created according to a similarity search method indicated by the index type. After completion of creating the indexes, the created indexes are written from the device memory of the PNM apparatus to the storage apparatus integrated with the PNM apparatus.

According to embodiments of the present disclosure, the search parameters may further include: a similarity search method. In embodiments, the PNM apparatus may load the vector dataset from a storage apparatus integrated with the PNM apparatus into a device memory of the PNM apparatus, based on the storage position of the vector dataset, and search for a plurality of vectors with a highest similarity to the query vector on the vector dataset loaded into the device memory of the PNM apparatus according to the similarity search method.

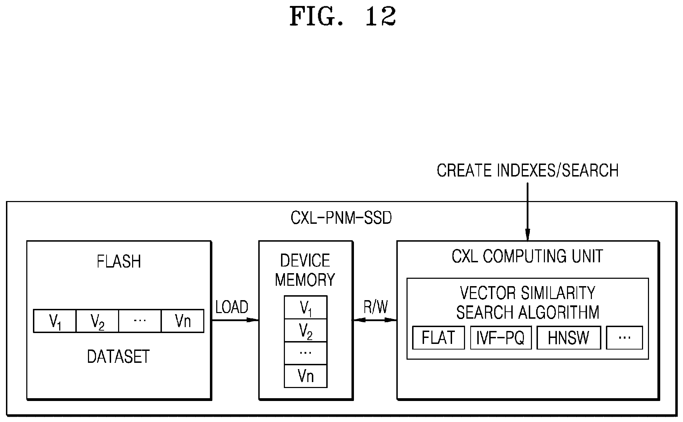

FIG. 12 illustrates a schematic diagram of creating indexes or performing a search on a PNM apparatus side according to embodiments of the present disclosure. In FIG. 12, the illustration is in terms of the CXL-PNM-SSD apparatus, but the present disclosure is not limited thereto. Referring to FIG. 12, the workflow on the PNM apparatus side may include: a first operation where the PNM apparatus receives a processing request (e.g., creating indexes/performing a search); a second operation where the PNM apparatus loads the vector dataset from the storage apparatus (e.g., the storage apparatus that is integrated with the PNM apparatus, i.e., the SSD, specifically the flash here) into the device memory; and a third operation where the computing unit of the PNM apparatus creates the indexes for the vectors in the loaded vector dataset in the case that the processing request is creating the indexes, and searches for the query vector on the loaded vector dataset in the case that the processing request is performing the search.

Vector similarity search algorithms (FLAT, IVF-PQ, HNSW, etc.), which have been widely used in the industry, may be transplanted in the computing unit inside the PNM apparatus, and the computing unit may be optimized and accelerated for specific search algorithms, so that the optimized and accelerated computing unit may improve the efficiency of search-related computations compared with a general-purpose CPU. In the case of creating the indexes, the computing unit of the PNM apparatus may access and read vectors in the device memory and create the indexes for the vectors in the vector dataset according to a similarity search method specified by the index type included in the index parameters. For example, in the case that the index type is PNM_IVF_PQ, the similarity search method is IVF_PQ. The computing unit of the PNM apparatus may create the indexes for the vectors in the vector dataset according to the IVF_PQ. After the index creating is completed, the computing unit of the PNM apparatus may write the created indexes from the device memory of the PNM apparatus to the storage apparatus integrated with the PNM apparatus. After the indexes are created, the created indexes may be used to subsequently perform the search on the vector dataset. Specifically, in the subsequent search (query) process, the search may be performed on the basis of the created indexes, and the search task may be performed by the CPU or may be offloaded by the CPU to be performed in the PNM apparatus. As an example, after the indexes according to the LSH have been created, that is, the vectors in the vector dataset have been hash-mapped into different hash buckets in the hash table, the subsequent search (query) for the query vector may be carried out in one of the hash buckets that has been mapped. The index parameters may include other parameters in addition to the index type, e.g., a storage position (of the vector dataset) indicating the storage address of the vector dataset in the flash, etc., but the present disclosure is not limited thereto. In addition, the similarity search methods specified by the index type may include FLAT, LSH, IVF-PQ, ANNOY, and HNSW, etc., but the present disclosure is not limited thereto.

In the case of performing a search, the computing unit of the PNM apparatus may access and read vectors in the device memory and, according to the similarity search method included in the search parameters, compute the similarity. The computing unit of the PNM apparatus may then write back the computed result to the device memory. For example, in the case that the similarity search method is FLAT, the computing unit may search for a plurality of vectors in the vector dataset that have the highest similarity to the query vector according to the FLAT and write the plurality of vectors that have the highest similarity back to the device memory. Further, the search parameters may include other parameters in addition to the query vector, the storage position of the vector dataset and the similarity search method, for example, a K (wherein K is a positive integer) which indicates returning the top K most similar vectors, and the like, but the present disclosure is not limited thereto. Further, the similarity search methods included in the search parameters may include FLAT, LSH, IVF-PQ, ANNOY, and HNSW, etc., but the present disclosure is not limited thereto. And, in the case that the similarity search method as a search parameter is omitted, it may have a default similarity search method, e.g., FLAT.

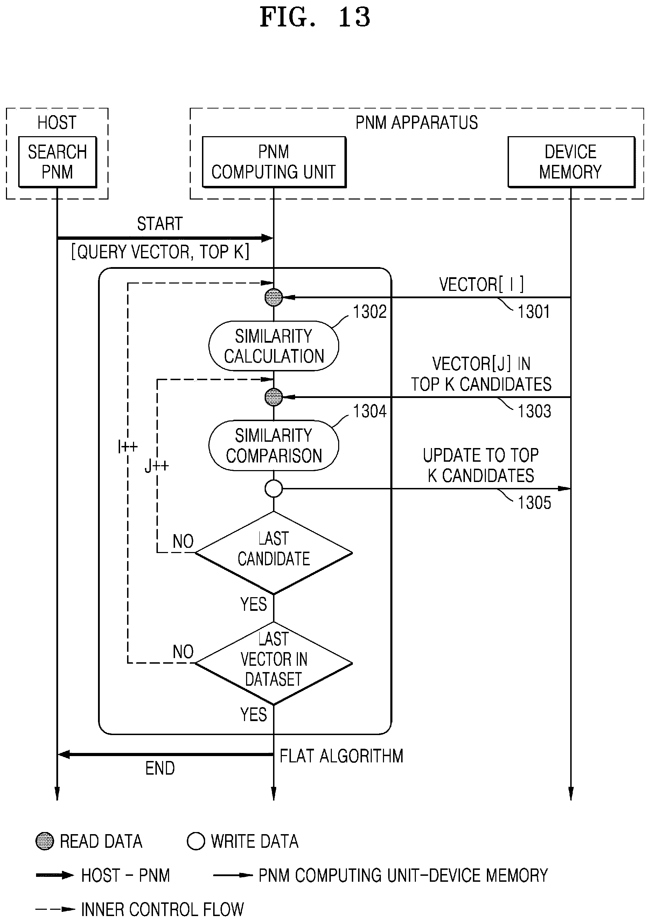

FIG. 13 illustrates a detailed process of performing a vector similarity computation within a PNM apparatus according to embodiments of the present disclosure. Referring to FIG. 13, the process of FIG. 13 describes a case where the host side initiates performing of the vector similarity search, and the CXL-PNM apparatus performs the FLAT vector similarity search algorithm on the vector dataset, but it should be understood that the disclosure is not limited thereto.

Operation start: the host initiates the performing of a vector similarity search, and the CXL-PNM apparatus performs a FLAT vector similarity search algorithm on the vector dataset.

Operation 1301: the computing unit of the PNM apparatus reads a vector from the vector dataset as a current vector. However, if all the vectors in the vector dataset have been processed, the process ends.

Operation 1302: the computing unit of the PNM apparatus calculates the similarity between the current vector and the query vector.

Operation 1303: the computing unit of the PNM apparatus reads one of the similarity results of the current candidates (i.e. the top-k most similar vectors).

Operation 1304: the computing unit of the PNM apparatus compares the read similarity result of the current candidate with the similarity result of the current vector.

Operation 1305: if the current vector is more similar than the current candidate, the computing unit of the PNM apparatus updates the current vector to the candidate result. If not, the process skips to operation 1303 if the last candidate has not been reached (e.g. to access the next candidate similarity result). The method compares the similarity value of the current value to each candidate in the current top K candidates, and replaces a candidate with the current vector if the current vector is more similar than the candidate vector. Once the similarity value of the current vector has been compared to the relative similarity values of all current candidates, the next vector is selected (operation S1301), or the method ends (if all vectors have been considered).

It should be understood that the present disclosure is illustrated taking the FLAT as an example, but the search method and search architecture of the present disclosure may be applied to other search algorithms, and the present disclosure is not limited thereto.

Returning to FIG. 11, in operation S1120, a result associated with the search-related computation is returned to the host after completion of the search-related computation.

According to embodiments of the present disclosure, when the indexes of the vector dataset are created, a result of completion of creating the indexes is returned to the host. Alternatively, when the search is performed on the vector dataset, a search result regarding the query vector is returned to the host.

In embodiments of the present disclosure, in the case of creating the indexes of the vector dataset, the PNM apparatus may return a result identifier of the completion of creating the indexes to indicate that the creating of the indexes is completed or not completed. And, in the case of performing the search on the vector dataset, for example, when the similarity search algorithm is employed, a plurality of vectors that are most similar to the query vector may be returned.

According to the above-described search method on the side of the PNM apparatus, the search-related computation is offloaded to the PNM apparatus for being performed, significantly reducing data movement between the CPU and the memory, and freeing the CPU from a large number of search-related computation tasks. This enables the CPU to respond more quickly to other prioritized tasks. Furthermore, the use of a storage apparatus in conjunction with the PNM apparatus improves the efficiency of the data transfer, and improves the performance of search-related computations for vector databases.

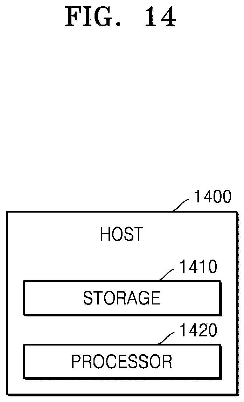

FIG. 14 illustrates a schematic diagram of a host according to embodiments of the present disclosure.

Referring to FIG. 14, the host 1400 may include a memory 1410 (e.g., RAM) and a processor 1420 (e.g., CPU), wherein the memory 1410 may store instructions; and the instructions, when executed by the processor 1420, may cause the processor 1420 to call a process near memory (PNM) apparatus to perform a search-related computation on a vector dataset in a vector database and receive a result regarding the search-related computation returned by the PNM apparatus.

According to embodiments of the present disclosure, the instructions, when executed by the processor, may cause the processor 1420 to call the PNM apparatus to perform the search-related computation on the vector dataset by transmitting a calling instruction to the PNM apparatus through an interface provided by the vector database.

According to embodiments of the present disclosure, the instructions, when executed by the processor 1420, may cause the processor to: in the case of creating indexes of the vector dataset, call the PNM apparatus to create the indexes for vectors in the vector dataset by providing index parameters to the PNM apparatus through an interface for creating the indexes, wherein the created indexes are used to perform a search on the vector dataset, wherein the index parameters include: an index type; or in the case of performing a search on the vector dataset, call the PNM apparatus to search for a query vector on the vector dataset by providing search parameters to the PNM apparatus through an interface for searching, wherein the search parameters include: the query vector and a storage position of the vector dataset.

According to embodiments of the present disclosure, the instructions, when executed by the processor 1420, may cause the processor to call the PNM apparatus to create the indexes for the vectors in the vector dataset in the case that the index type is an index type related to the PNM apparatus; and call the PNM apparatus to search for the query vector on the vector dataset in the case that the storage position of the vector dataset is in a storage apparatus integrated with the PNM apparatus.

According to embodiments of the present disclosure, the instructions, when executed by the processor, may cause the processor to: in the case of creating the indexes of the vector dataset, receive a result of completion of creating the indexes returned by the PNM apparatus; or in the case of performing the search on the vector dataset, receive a search result regarding the query vector returned by the PNM apparatus.

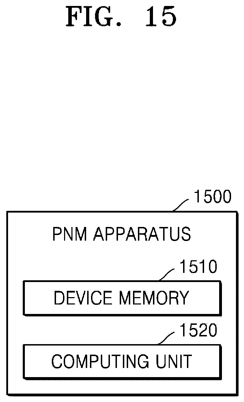

FIG. 15 illustrates a schematic diagram of a PNM apparatus according to embodiments of the present disclosure.

Referring to FIG. 15, the PNM apparatus 1500 includes a device memory 1510 and a computing unit 1520, wherein the computing unit 1520 may perform a search-related computation on a vector dataset in a vector database in response to receiving a calling instruction from a host; and return a result regarding the search-related computation to the host after completion of the search-related computation.

According to embodiments of the present disclosure, the computing unit 1520 may include one or more processors, and may perform the search-related computation on the vector dataset in response to the calling instruction transmitted by the host via an interface provided by the vector database.

According to embodiments of the present disclosure, the computing unit 1520 may create indexes for vectors in the vector dataset according to index parameters provided by the host using an interface for creating the indexes, wherein the created indexes are used to perform a search on the vector dataset, wherein the index parameters include: an index type; or search for a query vector on the vector dataset according to search parameters provided by the host using an interface for searching, wherein the search parameters include: the query vector and a storage position of the vector dataset.

According to embodiments of the present disclosure, the computing unit 1520 may load the vector dataset from a storage apparatus integrated with the PNM apparatus into a device memory 1510, create the indexes for the vectors in the vector dataset loaded into the device memory 1510 according to the index type, and after completion of creating the indexes, write the created indexes from the device memory 1510 to the storage apparatus integrated with the PNM apparatus.

According to embodiments of the present disclosure, the search parameters further include: a similarity search method, and the computing unit 1520 may load the vector dataset from a storage apparatus integrated with the PNM apparatus into the device memory 1510, according to the storage position of the vector dataset, and search for a plurality of vectors with a highest similarity to the query vector on the vector dataset loaded into the device memory 1510 according to the similarity search method.

According to embodiments of the present disclosure, the computing unit 1520 may, in the case of creating the indexes of the vector dataset, return a result of completion of creating the indexes to the host; or in the case of performing the search on the vector dataset, return a search result regarding the query vector to the host.

With the host and PNM apparatus of the present disclosure as described above, the search-related computation is offloaded to the PNM apparatus for being performed, thereby significantly reducing data movement between the CPU and the memory, and freeing the CPU from a large number of search-related computation tasks, enabling it to respond more quickly to other prioritized tasks; furthermore, the use of a storage apparatus in conjunction with the PNM apparatus improves the efficiency of the data transfer, thereby improves the performance of search-related computations for vector databases.

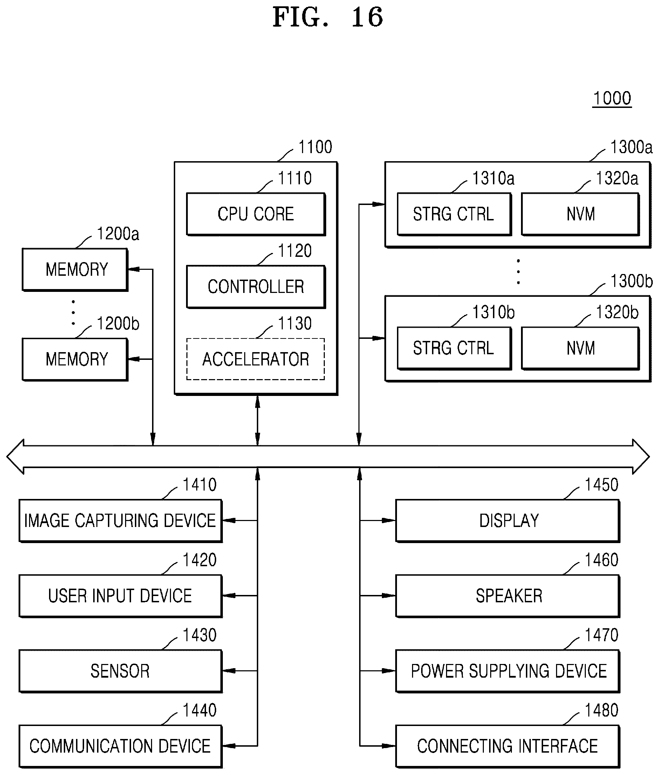

FIG. 16 is a diagram of a system 1000 to which a storage device is applied according to an embodiment.

The system 1000 of FIG. 16 may be, for example, a mobile system, such as a portable communication terminal (e.g., a mobile phone), a smartphone, a tablet personal computer (PC), a wearable device, a healthcare device, or an Internet of Things (IOT) device. However, the system 1000 of FIG. 16 is not limited thereto and may be, for example, a PC, a laptop computer, a server, a media player, or an automotive device (e.g., a navigation device).

Referring to FIG. 16, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000 including, for example, operations of other components included in the system 1000. The main processor 1100 may be implemented as, for example, a general-purpose processor, a dedicated processor, or an application processor.

The main processor 1100 may include at least one CPU core 1110 and a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as, for example, an artificial intelligence (AI) data operation. The accelerator 1130 may include, for example, a graphics processing unit (GPU), a neural processing unit (NPU) and/or a data processing unit (DPU), and may be implemented as a chip that is physically separate from the other components of the main processor 1100.

The memories 1200a and 1200b may be used as main memory devices of the system 1000. Each of the memories 1200a and 1200b may include a volatile memory, such as, for example, static random access memory (SRAM) and/or dynamic RAM (DRAM). Each of the memories 1200a and 1200b may also include non-volatile memory according to embodiments, such as, for example, a flash memory, phase-change RAM (PRAM) and/or resistive RAM (RRAM). The memories 1200a and 1200b may be implemented in the same package as the main processor 1100. The memory 1200b may also be a PNM apparatus. For example, the memory 1200a may be implemented in the same package as the main processor 1100, while the memory 1200b may be the PNM apparatus external to the main processor, and the PNM apparatus may also be integrated with a storage device (e.g. SSD).

The storage devices 1300a and 1300b may serve as non-volatile storage devices configured to store data regardless of whether power is supplied thereto, and may have a larger storage capacity than the memories 1200a and 1200b. The storage devices 1300a and 1300b may respectively include storage controllers (STRG CTRL) 1310a and 1310b and non-volatile memories (NVM) 1320a and 1320b configured to store data under the control of the storage controllers 1310a and 1310b. Although the NVMs 1320a and 1320b may include flash memories having a two-dimensional (2D) structure or a three-dimensional (3D) V-NAND structure, the NVMs 1320a and 1320b may include other types of NVMs, such as, for example, PRAM and/or RRAM.

The storage devices 1300a and 1300b may be physically separated from the main processor 1100 and included in the system 1000, or may be implemented in the same package as the main processor 1100. The storage devices 1300a and 1300b may be solid-state devices (SSDs) or memory cards, and be removably combined with other components of the system 100 through an interface, such as the connecting interface 1480 that is described further below. The storage devices 1300a and 1300b may be devices to which a standard protocol, such as, for example, a universal flash storage (UFS), an embedded multi-media card (eMMC), or a non-volatile memory express (NVMe), is applied. However, the storage devices 1300a and 1300b are not limited thereto.

The image capturing device 1410 may capture still images or moving images. The image capturing device 1410 may include, for example, a camera, a camcorder, and/or a webcam.

The user input device 1420 may receive various types of data input by a user of the system 1000 and may include, for example, a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include, for example, a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include, for example, an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery embedded in the system 1000 and/or an external power source, and supply the converted power to each of components of the system 1000.

The connecting interface 1480 may provide a connection between the system 1000 and an external device, which is connected to the system 1000, and is capable of transmitting and receiving data to and from the system 1000. The connecting interface 1480 may be implemented by using various interface schemes, such as, for example, advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

According to the embodiments of the present disclosure, a system (e.g., 1000), to which a process near memory (PNM) apparatus is applied, is provided, the system includes a main processor (e.g., 1100); a memory (e.g., 1200a and 1200b); a PNM apparatus (e.g., 1200b); and a storage device (e.g., 1300a and 1300b), wherein the PNM apparatus may perform the search method applied to the PNM apparatus as described above.

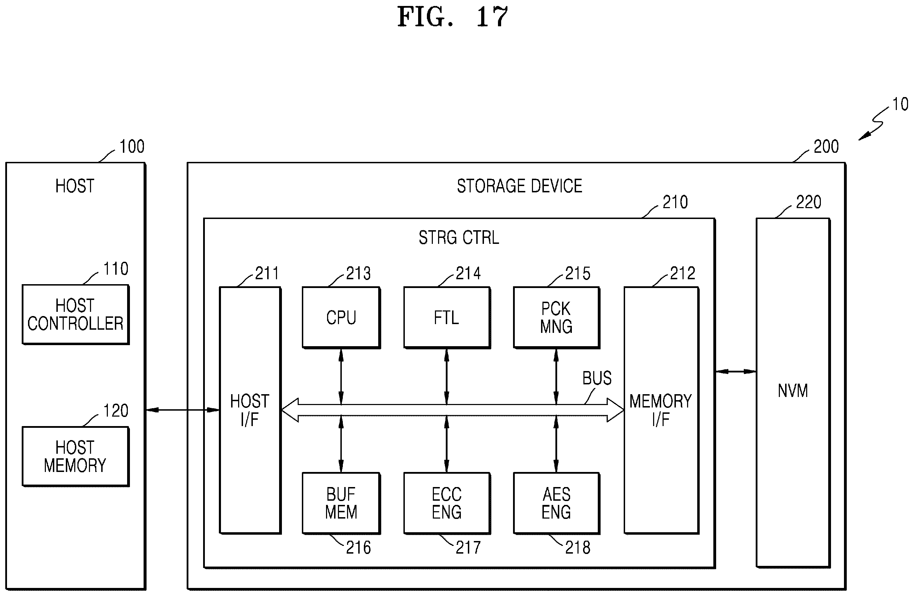

FIG. 17 is a block diagram of a host storage system 10 according to an embodiment.

The host storage system 10 may include a host 100 and a storage device 200. The storage device 200 may include a storage controller 210 and an NVM 220. According to an embodiment, the host 100 may include a host controller 110 and a host memory 120. The host memory 120 may serve as a buffer memory configured to temporarily store data to be transmitted to the storage device 200 or data received from the storage device 200.

The storage device 200 may include storage media configured to store data in response to requests from the host 100. As an example, the storage device 200 may include at least one of an SSD, an embedded memory, and a removable external memory. When the storage device 200 is an SSD, the storage device 200 may be a device that conforms to an NVMe standard. When the storage device 200 is an embedded memory or an external memory, the storage device 200 may be a device that conforms to a UFS standard or an eMMC standard. Each of the host 100 and the storage device 200 may generate a packet according to an adopted standard protocol and may transmit the packet.

When the NVM 220 of the storage device 200 includes a flash memory, the flash memory may include a 2D NAND memory array or a 3D (or vertical) NAND (VNAND) memory array. As another example, the storage device 200 may include various other kinds of NVMs. For example, the storage device 200 may include magnetic RAM (MRAM), spin-transfer torque MRAM, conductive bridging RAM (CBRAM), ferroelectric RAM (FRAM), PRAM, RRAM, and various other kinds of memories.

According to an embodiment, the host controller 110 and the host memory 120 may be implemented as separate semiconductor chips. Alternatively, in some embodiments, the host controller 110 and the host memory 120 may be integrated in the same semiconductor chip. As an example, the host controller 110 may be any one of a plurality of devices included in an application processor (AP). The AP may be implemented as, for example, a system-on-chip (SoC). Further, the host memory 120 may be an embedded memory included in the AP or an NVM or memory device located outside the AP. The host may also include a host memory 120 implemented external to the host, e.g., the host memory 120 may be a near-memory processing (PNM) apparatus external to the host, and the PNM apparatus may also be integrated with a storage device (e.g., SSD).

The host controller 110 may manage an operation of storing data (e.g., write data) of a buffer region of the host memory 120 in the NVM 220 or an operation of storing data (e.g., read data) of the NVM 220 in the buffer region.

The storage controller 210 may include a host interface 211, a memory interface 212, a CPU 213, a flash translation layer (FTL) 214, a packet manager 215, a buffer memory 216, an error correction code (ECC) engine 217, and an advanced encryption standard (AES) engine 218. The storage controller 210 may further include a working memory in which the FTL 214 is loaded. The CPU 213 may execute the FTL 214 to control data write and read operations on the NVM 220.

The host interface 211 may transmit and receive packets to and from the host 100. A packet transmitted from the host 100 to the host interface 211 may include a command or data to be written to the NVM 220. A packet transmitted from the host interface 211 to the host 100 may include a response to the command or data read from the NVM 220. The memory interface 212 may transmit data to be written to the NVM 220 to the NVM 220 or receive data read from the NVM 220. The memory interface 212 may be configured to comply with a standard protocol, such as, for example, Toggle or open NAND flash interface (ONFI).

The FTL 214 may perform various functions, such as, for example, an address mapping operation, a wear-leveling operation, and a garbage collection operation. The address mapping operation may be an operation of converting a logical address received from the host 100 into a physical address used to actually store data in the NVM 220. The wear-leveling operation may be a technique for preventing or reducing excessive deterioration of a specific block by allowing blocks of the NVM 220 to be uniformly used. As an example, the wear-leveling operation may be implemented using a firmware technique that balances erase counts of physical blocks. The garbage collection operation may be a technique for ensuring usable capacity in the NVM 220 by erasing an existing block after copying valid data of the existing block to a new block.

The packet manager 215 may generate a packet according to a protocol of an interface, which consents to the host 100, or parse various types of information from the packet received from the host 100. In addition, the buffer memory 216 may temporarily store data to be written to the NVM 220 or data to be read from the NVM 220. Although the buffer memory 216 may be a component included in the storage controller 210, the buffer memory 216 may be disposed outside of the storage controller 210 in embodiments.

The ECC engine 217 may perform error detection and correction operations on read data read from the NVM 220. For example, the ECC engine 217 may generate parity bits for write data to be written to the NVM 220, and the generated parity bits may be stored in the NVM 220 together with write data. During the reading of data from the NVM 220, the ECC engine 217 may correct an error in the read data by using the parity bits read from the NVM 220 along with the read data, and output error-corrected read data.

The AES engine 218 may perform at least one of an encryption operation and a decryption operation on data input to the storage controllers 210 by using a symmetric-key algorithm.

According to the embodiments of the present disclosure, a host storage system (e.g., 10) is provided, the host storage system includes a host (e.g., 100); and a process near memory (PNM) apparatus, wherein the host may perform the search method applied to the host as described above, and the PNM apparatus may perform the search method applied to the PNM apparatus as described above.

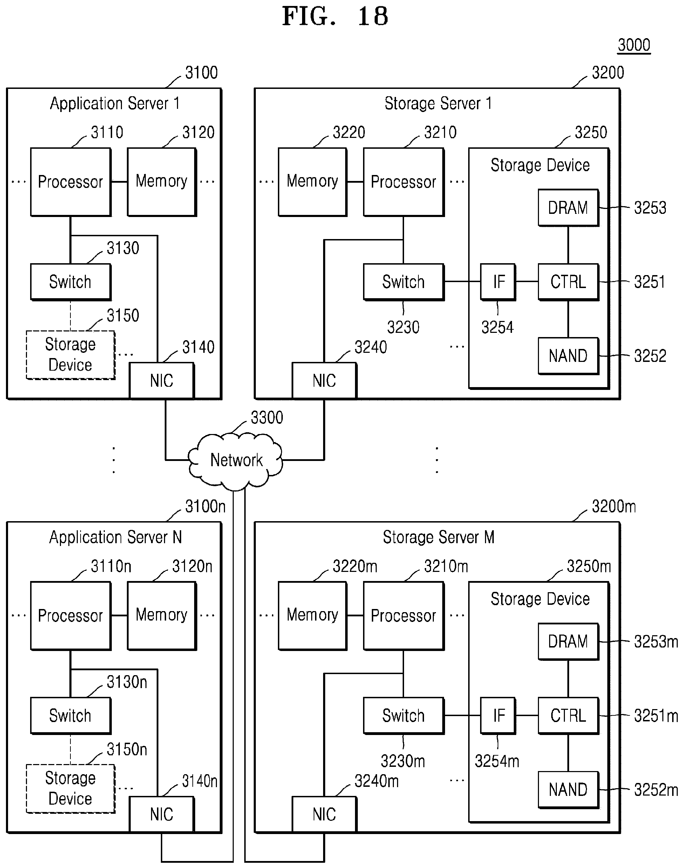

FIG. 18 is a diagram of a data center 3000 to which a memory device is applied, according to an embodiment.

### Platform portion - Server (Application/Storage)

Referring to FIG. 18, the data center 3000 may be a facility that collects various types of pieces of data and provides services, and may be referred to as a data storage center. The data center 3000 may be a system for operating a search engine and a database, and may be a computing system used by companies, such as banks or government agencies. The data center 3000 may include application servers 3100 to 3100n and storage servers 3200 to 3200m, in which n and m are positive integers. The number of application servers 3100 to 3100n and the number of storage servers 3200 to 3200m may be variously selected according to embodiments. The number of application servers 3100 to 3100n may be different from the number of storage servers 3200 to 3200m.

The application server 3100 or the storage server 3200 may include at least one of processors 3110 and 3210 and memories 3120 and 3220, at least one of switches 3130 to 3130n, at least one of network interface cards (NICs) 3140 to 3140n and 3240 to 3240m, at least one of DRAMs 3253 to 3253m, and at least one of controllers 3251 to 3251m. The storage server 3200 will now be described as an example. The processor 3210 may control all operations of the storage server 3200, access the memory 3220, and execute instructions and/or data loaded in the memory 3220. The memory 3220 may be, for example, a double-data-rate synchronous DRAM (DDR SDRAM), a high-bandwidth memory (HBM), a hybrid memory cube (HMC), a dual in-line memory module (DIMM), Optane DIMM, and/or a non-volatile DIMM (NVMDIMM). In some embodiments, the numbers of processors 3210 and memories 3220 included in the storage server 3200 may be variously selected. In an embodiment, the processor 3210 and the memory 3220 may provide a processor-memory pair. In an embodiment, the number of processors 3210 may be different from the number of memories 3220. The processor 3210 may include a single-core processor or a multi-core processor. The above description of the storage server 3200 may be similarly applied to the application server 3100. In some embodiments, the application server 3100 may not include a storage device 3150. The storage server 3200 may include at least one storage device 3250. The number of storage devices 3250 included in the storage server 3200 may be variously selected according to embodiments.

### Platform portion - Network

The application servers 3100 to 3100n may communicate with the storage servers 3200 to 3200m through a network 3300. The network 3300 may be implemented by using a fiber channel (FC) or Ethernet. In this case, the FC may be a medium used for relatively high-speed data transmission and may use an optical switch with high performance and high availability. The storage servers 3200 to 3200m may be provided as file storages, block storages, or object storages according to an access method of the network 3300.

In an embodiment, the network 3300 may be a storage-dedicated network, such as a storage area network (SAN). For example, the SAN may be an FC-SAN, which uses an FC network and is implemented according to an FC protocol (FCP). As another example, the SAN may be an Internet protocol (IP)-SAN, which uses a transmission control protocol (TCP)/IP network and is implemented according to a SCSI over TCP/IP or Internet SCSI (iSCSI) protocol. In an embodiment, the network 3300 may be a general network, such as a TCP/IP network. For example, the network 3300 may be implemented according to a protocol, such as FC over Ethernet (FCoE), network attached storage (NAS), and NVMe over Fabrics (NVMe-oF).

Hereinafter, the application server 3100 and the storage server 3200 will mainly be described. A description of the application server 3100 may be applied to another application server 3100n, and a description of the storage server 3200 may be applied to another storage server 3200m.

The application server 3100 may store data, which is requested by a user or a client to be stored, in one of the storage servers 3200 to 3200m through the network 3300. Also, the application server 3100 may obtain data, which is requested by the user or the client to be read, from one of the storage servers 3200 to 3200m through the network 3300. For example, the application server 3100 may be implemented as a web server or a database management system (DBMS).

The application server 3100 may access a memory 3120n or a storage device 3150n, which is included in another application server 3100n, through the network 3300. Alternatively, the application server 3100 may access memories 3220 to 3220m or storage devices 3250 to 3250m, which are included in the storage servers 3200 to 3200m, through the network 3300. Thus, the application server 3100 may perform various operations on data stored in application servers 3100 to 3100n and/or the storage servers 3200 to 3200m. For example, the application server 3100 may execute an instruction for moving or copying data between the application servers 3100 to 3100n and/or the storage servers 3200 to 3200m. In this case, the data may be moved from the storage devices 3250 to 3250m of the storage servers 3200 to 3200m to the memories 3120 to 3120n of the application servers 3100 to 3100n directly or through the memories 3220 to 3220m of the storage servers 3200 to 3200m. The data moved through the network 3300 may be data encrypted for security or privacy. The storage server may include a PNM apparatus, and the PNM apparatus may also be integrated with a storage device (e.g., an SSD).

### Organic relationship - Interface structure/type

The storage server 3200 will now be described as an example. An interface 3254 may provide physical connection between a processor 3210 and a controller 3251 and a physical connection between a network interface card (NIC) 3240 and the controller 3251. For example, the interface 3254 may be implemented using a direct attached storage (DAS) scheme in which the storage device 3250 is directly connected with a dedicated cable. For example, the interface 3254 may be implemented by using various interface schemes, such as ATA, SATA, e-SATA, an SCSI, SAS, PCI, PCIe, NVMe, IEEE 1394, a USB interface, an SD card interface, an MMC interface, an eMMC interface, a UFS interface, an eUFS interface, and/or a CF card interface.

The storage server 3200 may further include a switch 3230 and the NIC 3240. The switch 3230 may selectively connect the processor 3210 to the storage device 3250 or selectively connect the NIC 3240 to the storage device 3250 under the control of the processor 3210.

In an embodiment, the NIC 3240 may include a network interface card and a network adaptor. The NIC 3240 may be connected to the network 3300 by, for example, a wired interface, a wireless interface, a BLUETOOTH interface, or an optical interface. The NIC 3240 may include an internal memory, a digital signal processor (DSP), and a host bus interface and may be connected to the processor 3210 and/or the switch 3230 through the host bus interface. The host bus interface may be implemented as one of the above-described examples of the interface 3254. In an embodiment, the NIC 3240 may be integrated with at least one of the processor 3210, the switch 3230, and the storage device 3250.

### Organic Relationship - Interface operation

In the storage servers 3200 to 3200m or the application servers 3100 to 3100n, a processor may transmit a command to storage devices 3150 to 3150n and 3250 to 3250m or the memories 3120 to 3120n and 3220 to 3220m and program or read data. In this case, the data may be data of which an error is corrected by an ECC engine. The data may be data on which a data bus inversion (DBI) operation or a data masking (DM) operation is performed, and may include cyclic redundancy code (CRC) information. The data may be data encrypted for security or privacy.

Storage devices 3150 to 3150n and 3250 to 3250m may transmit a control signal and a command/address signal to NAND flash memory devices 3252 to 3252m in response to a read command received from the processor. Thus, when data is read from the NAND flash memory devices 3252 to 3252m, a read enable (RE) signal may be input as a data output control signal, and thus, the data may be output to a DQ bus. A data strobe signal DQS may be generated using the RE signal. The command and the address signal may be latched in a page buffer depending on a rising edge or falling edge of a write enable (WE) signal.

### Product portion - SSD basic operation

The controller 3251 may control all operations of the storage device 3250. In an embodiment, the controller 3251 may include SRAM. The controller 3251 may write data to the NAND flash memory device 3252 in response to a write command or read data from the NAND flash memory device 3252 in response to a read command. For example, the write command and/or the read command may be provided from the processor 3210 of the storage server 3200, the processor 3210m of another storage server 3200m, or the processors 3110 and 3110n of the application servers 3100 and 3100n. DRAM 3253 may temporarily store (or buffer) data to be written to the NAND flash memory device 3252 or data read from the NAND flash memory device 3252. Also, the DRAM 3253 may store metadata. Here, the metadata may be user data or data generated by the controller 3251 to manage the NAND flash memory device 3252. The storage device 3250 may include a secure element (SE) for security or privacy.

According to example embodiments of the present disclosure, a data center system (e.g., 3000) is provided, the data center system includes a plurality of application servers (3100 to 3100n); and a plurality of storage servers (e.g., 3200 to 3200m), wherein each storage server includes a process near memory (PNM) apparatus, wherein the PNM apparatus may perform the search method applied to the PNM apparatus as described above.

As is traditional in the field of the disclosure, embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, etc., which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions.

According to embodiments of the present disclosure, there is provided a computer-readable storage medium storing a computer program, wherein the computer program when executed by a processor, implements the search method as described above.

According to embodiments of the present disclosure, there is provided an electronic apparatus comprising: a processor, and a memory storing a computer program, wherein the computer program when executed by a processor, implements the search method as described above.

According to embodiments of the disclosure, a computer-readable storage medium may also be provided, in which a computer program is stored thereon. The program, when executed, may implement the search method as described above. Examples of computer-readable storage media include read-only memory (ROM), random access programmable read-only memory (PROM), electrically erasable programmable read-only memory (EEPROM), random access memory (RAM), dynamic random access memory (DRAM), static random access memory (SRAM), flash memory, non-volatile memory, CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, BLU-RAY or optical disk memory, hard disk drive (HDD), solid state drive (SSD), card-based memory (such as, e.g., multimedia cards, Secure Digital (SD) cards and/or Extreme Digital (XD) cards), magnetic tapes, floppy disks, magneto-optical data storage devices, optical data storage devices, hard disks, solid state disks, and/or any other device, where the other device is configured to store the computer programs and any associated data, data files, and/or data structures in a non-transitory manner and to provide the computer programs and any associated data, data files, and/or data structures to a processor or computer, so that the processor or computer may execute the computer program. The computer program in the computer readable storage medium may run in an environment deployed in a computer device such as, for example, a terminal, client, host, agent, server, etc.. In one example, the computer program and any associated data, data files and/or data structures are distributed on a networked computer system such that the computer program and any associated data, data files and/or data structures are stored, accessed, and/or executed in a distributed manner by one or more processors or computers.

The search method, the host and the PNM apparatus according to example embodiments of the present disclosure, the search-related computation is offloaded to the PNM apparatus for being performed, thereby significantly reducing data movement between the CPU and the memory, and freeing the CPU from a large number of search-related computation tasks, enabling it to respond more quickly to other prioritized tasks; furthermore, the use of a storage apparatus in conjunction with the PNM apparatus improves the efficiency of the data transfer, thereby improves the performance of search-related computations for vector databases.

While the present disclosure has been particularly shown and described with reference to embodiments thereof, it will be understood by those of ordinary skill in the art that various changes in form and detail may be made therein without departing from the scope of the present disclosure as defined by the following claims.

## Claims

1. A search method, executed by at least one processor of a host, the method comprising:
calling a process near memory, PNM, apparatus to perform a search-related computation on a vector dataset in a vector database (S710); and
receiving a result associated with the search-related computation from the PNM apparatus (S720).

2. The method of claim 1, wherein the calling the PNM apparatus (S710) is based on transmitting a calling instruction to the PNM apparatus through an interface provided by the vector database.

3. The method of claim 2, wherein the calling the PNM apparatus (S710) comprises one of:
calling the PNM apparatus to create one or more indexes for vectors in the vector dataset by providing index parameters to the PNM apparatus through an index creation interface of the vector database, wherein the one or more indexes are used to perform a search on the vector dataset, and the index parameters comprise an index type; or
calling the PNM apparatus to search for a query vector in the vector dataset by providing search parameters to the PNM apparatus through a search interface of the vector database, wherein the search parameters comprise the query vector and a storage position of the vector dataset.

4. The method of claim 3, wherein the calling the PNM apparatus to create the one or more indexes for vectors in the vector dataset comprises calling the PNM apparatus to create the one or more indexes for the vectors in the vector dataset based on the index type having a value associated with the PNM apparatus, and
wherein calling the PNM apparatus to search for the query vector in the vector dataset comprises calling the PNM apparatus to search for the query vector in the vector dataset based on a storage position of the vector dataset being a storage apparatus integrated with the PNM apparatus.

5. The method of claim 3 or claim 4, wherein the receiving the result associated with the search-related computation from the PNM apparatus (S720) comprises:
receiving a result of completion of creating the one or more indexes from the PNM apparatus based on the PNM apparatus being called to create the one or more indexes for vectors in the vector dataset; or
receiving a search result associated with the query vector from the PNM apparatus based on the PNM apparatus being called to search for the query vector in the vector dataset.

6. A search method, executed by at least one processor of a process near memory, PNM, apparatus, the method comprising:
performing a search-related computation on a vector dataset in a vector database in response to receiving a calling instruction from a host (S1110); and
returning a result associated with the search-related computation to the host after completion of the search-related computation (S1120).

7. The method of claim 6, wherein the search-related computation (S1110) is performed in response to the calling instruction transmitted by the host via an interface provided by the vector database.

8. The method of claim 7, wherein the performing the search-related computation (S1110) comprises one of:
creating one or more indexes for vectors in the vector dataset based on index parameters provided by the host using an index creation interface of the vector database, wherein the one or more indexes are used to perform a search on the vector dataset, and the index parameters comprise an index type; or
searching for a query vector in the vector dataset based on search parameters provided by the host using a search interface of the vector database, wherein the search parameters comprises the query vector and a storage position of the vector dataset.

9. The method of claim 8, wherein the creating the one or more indexes for vectors in the vector dataset comprises:
loading the vector dataset from a storage apparatus integrated with the PNM apparatus into a device memory of the PNM apparatus,
creating the one or more indexes for the vectors in the vector dataset that is loaded into the device memory of the PNM apparatus based on a similarity search method indicated by the index type, and
writing the one or more indexes from the device memory of the PNM apparatus to the storage apparatus integrated with the PNM apparatus.

10. The method of claim 8 or claim 9, wherein the search parameters further comprise a similarity search method, and
wherein the searching for the query vector in the vector dataset based on the search parameters comprises:
loading the vector dataset from a storage apparatus integrated with the PNM apparatus into a device memory of the PNM apparatus based on a storage position of the vector dataset, and
searching for a plurality of vectors in the vector dataset that is loaded into the device memory of the PNM apparatus having a similarity to the query vector based on the similarity search method.

11. The method of any of claims 8-10, wherein the returning the result associated with the search-related computation to the host (S1120) comprises:
returning a result of completion of creating the one or more indexes to the host based on the PNM apparatus being called to create the one or more indexes for vectors in the vector dataset; or
returning a search result associated with the query vector to the host based on the PNM apparatus being called to search for the query vector in the vector dataset.

12. A process near memory, PNM, apparatus, comprising:
device memory (1510); and
a computing unit (1520) comprising at least one processor configured to:
perform a search-related computation on a vector dataset in a vector database in response to receiving a calling instruction from a host; and
return a result associated with the search-related computation to the host after completion of the search-related computation.

13. The PNM apparatus of claim 12, wherein the at least one processor is further configured to:
perform the search-related computation on the vector dataset in response to the calling instruction transmitted by the host via an interface provided by the vector database.

14. The PNM apparatus of claim 13, wherein the at least one processor is further configured to:
create one or more indexes for vectors in the vector dataset based on index parameters provided by the host using an index creation interface of the vector database, wherein the one or more indexes are used to perform a search on the vector dataset, and wherein the index parameters comprise an index type; or
search for a query vector in the vector dataset based on search parameters provided by the host using a search interface of the vector database, wherein the search parameters comprises the query vector and a storage position of the vector dataset.

15. The PNM apparatus of claim 14, wherein the at least one processor is further configured to:
load the vector dataset from a storage apparatus integrated with the PNM apparatus into a device memory of the PNM apparatus,
create the one or more indexes for the vectors in the vector dataset that is loaded into the device memory of the PNM apparatus based on a similarity search method indicated by the index type, and
write the one or more indexes from the device memory of the PNM apparatus to the storage apparatus integrated with the PNM apparatus.
